# EUROPÄISCHE PATENTANMELDUNG

(11) **EP 3 501 620 A1**
(43) Veröffentlichungstag der Anmeldung: **26.06.2019**
(21) Anmeldenummer: 18212588.0
(22) Anmeldetag: 14.12.2018
(51) Int. Cl.: B01D 25/176

(54) **STÜTZRING FÜR DIE BEFESTIGUNG EINES FILTERTUCHS AN EINEM FILTERELEMENT**

(30) Priorität: 21.12.2017 DE 202017107846 U
(71) Anmelder: Otto Markert & Sohn GmbH, 24539 Neumünster (DE)
(72) Erfinder: Hammerich, Thomas, 24537 Neumünster (DE)
(74) Vertreter: Jaeschke, Rainer

(57) **Zusammenfassung**

Die Erfindung betrifft einen Stützring zum Halten von Filtertüchern an einer Filterplatte, welcher Stützring zwei koaxiale Teilringe umfasst, die jeweils einen sich in der montierten Lage gegenüberliegenden Flanschabschnitt aufweisen, welche Flanschabschnitte in der montierten Lage jeweils ein Filtertuch im Bereich der Durchstecköffnung der Filterplatte überdecken und die jeweils einen Hülsenabschnitt aufweisen, die in die Durchstecköffnung hineinragen, welche Hülsenabschnitte über wenigstens einen umlaufenden Vorsprung, der in wenigstens eine korrespondierende umlaufende Nut eingreift, miteinander verbundbar sind derart, dass die Teilringe jeweils von einer Seite der Filterplatte montierbar sind. Gemäß der Erfindung wird vorgeschlagen, dass die dem Filtertuch zugekehrten Anlageflächen der Flanschabschnitte einen in Richtung auf die Filterplatte geneigten Verlauf aufweisen derart, dass die Flanschabschnitte in der montierten Lage unter Vorspannung an dem Filtertuch anliegen.

## Beschreibung

Die Erfindung betrifft einen Stützring zum Halten von Filtertüchern an einer Filterplatte, welcher Stützring zwei koaxiale Teilringe umfasst, die jeweils einen sich in der montierten Lage gegenüberliegenden Flanschabschnitt aufweisen, welche Flanschabschnitte in der montierten Lage jeweils ein Filtertuch im Bereich der Durchstecköffnung der Filterplatte überdecken und die jeweils einen Hülsenabschnitt aufweisen, die in die Durchstecköffnung hineinragen, welche Hülsenabschnitte über wenigstens einen umlaufenden Vorsprung, der in wenigstens eine korrespondierende umlaufende Nut eingreift, miteinander verbundbar sind derart, dass die Teilringe jeweils von einer Seite der Filterplatte montierbar sind.

Solche Stützringe sind in der Filtertechnik allgemein bekannt. Sie dienen dazu, das Filtertuch oder die Filtertücher im Bereich einer Durchstecköffnung der Filterplatte an dieser zu fixieren. Durch die Durchstecköffnung fließt die Trübe, die gefiltert werden muss. Es ist daher wichtig, dass die Trübe nicht auf die Reinseite des Filtertuchs gelangt.

Bei sogenannten Durchstecktüchern ist der Stützring mit den beiden Filtertüchern fest verbunden. Ein Filtertuch wird dann mit einem Teil des Stützrings durch die Durchstecköffnung gesteckt und auf der anderen Seite wieder entfaltet und über die Filterplatte gelegt.

Die Filterplatten sind in der Regel Bestandteil einer Filterpresse, die mehrere derartiger Filterplatten aufweist, die hintereinander unter Bildung eines Filterpakets in einem Rahmen gehalten sind. Zum Reinigen der Filteranlage und zum Entfernen des Filterkuchens und der Filtertücher werden die Filterplatten auseinandergezogen. Es verbleibt in der geöffneten Lage jedoch nur ein geringer Abstand der auseinandergezogenen Filterplatten, so dass das Ausbauen der Filtertücher einerseits und das erneute Einlegen der Filtertücher andererseits einen erhöhten Arbeitsaufwand und einige Geschicklichkeit erfordern.

Es sind mehrteilige Stützringe bekannt, die eine Montage eines Filtertuchs nur von einer Seite der Filterplatte ohne Durchstecken ermöglichen. Die DE 694 23 637 T2 beschreibt einen Stützring, der sich aus zwei Teilringen zusammensetzt, die sich in der Durchstecköffnung konisch überlappen. Der Konuswinkel ist relativ klein, um die gewünschte dichte und feste Verbindung der Filtertücher an der Filterplatte zu gewährleisten. Gleichwohl besteht die Gefahr, dass die Trübe zwischen die übereinanderliegenden Konusflächen und somit auf die Klarseite gelangt. In diesem Dokument ist auch offenbart, die Teilringe miteinander zu verschrauben. Dies ist bei fest mit den Teilringen verbundenen Filtertüchern nicht oder nur mit großem Aufwand möglich. Sofern das Filtertuch nicht mit den Teilringen verbunden ist, besteht die Gefahr, dass sich das Filtertuch durch die Drehbewegung und der Reibung zwischen Stützring und Filtertuch verschiebt.

Weiterhin ist es aus diesem Dokument DE 694 23 637 T2 bekannt, einen dreiteiligen Stützring vorzusehen. Es sind zwei Teilringe mit einem Flanschabschnitt und einem Hülsenabschnitt vorhanden, die in der montierten Lage durch eine passgenaue Hülse, die nach dem Anlegen der Filtertücher und der Teilringe in die Durchstecköffnung getrieben wird. Dadurch wird ein dichter und fester Halt des Filtertuchs im Bereich der Durchstecköffnung erreicht. Schließlich beschreibt dieses Dokument einen zweiteiligen Stützring, dessen Teilringe über einen Bajonettverschluss miteinander verbunden werden. Auch hier besteht die Gefahr, dass sich das Filtertuch aufgrund der erforderlichen Drehbewegung auf der Filterplatte verschiebt.

Aus der DE 199 02 925 A1 ist ein Stützring bekannt, dessen Teilringe über einen Dichtring miteinander verbunden sind. Das richtige Einlegen dieses Dichtrings zwischen den Filterplatten ist nur mit erhöhtem Aufwand möglich. Die DE 101 56 199 C1 offenbart einen mehrteiligen Stützring, dessen Teilringe über eine Durchsteckhülse miteinander verbunden sind. Die Durchsteckhülse wird in der montierten Lage durch einen Sicherungsring gehalten. Die Demontage und die Montage erfordern in den beengten Raumverhältnissen der geöffneten Filteranlage einige Geschicklichkeit.

Der Erfindung liegt die Aufgabe zugrunde, einen Stützring der eingangs geschilderten Art so auszubilden, dass eine einfache Montage und dennoch ein dichter und fester Halt der Filtertücher an der Filterplatte möglich ist.

Die Aufgabe wird gemäß der Erfindung dadurch gelöst, dass die dem Filtertuch zugekehrten Anlageflächen der Flanschabschnitte einen in Richtung auf die Filterplatte geneigten Verlauf aufweisen derart, dass die Flanschabschnitte in der montierten Lage unter Vorspannung an dem Filtertuch anliegen. Durch den in Richtung auf das Filtertuch geneigten Verlauf der Anlageflächen werden die Flanschabschnitte im Zuge der Montage nach außen gebogen, so dass sie aufgrund der Elastizität des Stützrings beziehungsweise dessen Flanschabschnitte fest und dicht auf dem Filtertuch anliegen. Gleichzeitig rastet der Vorsprung des einen Hülsenabschnitts in die Nut des anderen Hülsenabschnitts ein, so dass eine feste Verbindung der Teilringe untereinander erreicht wird. Der Stützring klemmt somit die Filtertücher auf jeder Seite der Filterplatte fest.

Vorzugsweise beträgt der Anstellwinkel der Anlagefläche des Flanschabschnitts zur Längsachse des Stützrings in der Loslage zwischen 80° und 89,5°. Diese Anstellung ermöglicht einen einfache Montage einerseits und eine dichtes Anliegen der Flanschabschnitte auf dem Filtertuch andererseits.

Es kann auch vorgesehen werden, dass der Anstellwinkel der Anlagefläche des Flanschabschnitts zur Längsachse des Stützrings in Richtung auf den äußeren Rand des Flanschabschnitts stetig oder abschnittsweise zunimmt. Es kann beispielsweise zweckmäßig sein, dass die Anlagefläche einen inneren Ringabschnitt und wenigsten einen äußeren Ringabschnitt aufweist, und dass der innere Ringabschnitt in einem Anstellwinkel von 80° bis 87° zur Längsachse und der äußere Ringabschnitt in einem Anstellwinkel von 87° bis 89,5° zur Längsachse verläuft. Dann muss erst gegen Ende des Zusammenschiebewegs ein erhöhter Druck zum endgültigen Einrasten der Hülsenabschnitte aufgebracht werden.

Weiterhin kann es zweckmäßig sein, dass, von der Längsachse des Stützrings gesehen, der Hülsenabschnitt des einen Teilrings den Hülsenabschnitt des anderen Teilrings in der montierten Lage übergreift und dass die Länge der sich übergreifenden Hülsenabschnitte zwischen 45% und 98% und insbesondere 60% bis 98% des Abstands der Anlageflächen der Flanschabschnitte in der montierten Lage beträgt. Dadurch wird eine besonders dichte Verbindung erreicht. Weiterhin werden die Hülsenabschnitte beim Andrücken der Teilringe durch die Anstellung der Anlageflächen etwas nach oben, also in Richtung auf die Innenwandung der Durchsteckbohrung beziehungsweise auf die Innenwandung des übergreifenden Hülsenabschnitts gedrückt, so dass auch dadurch eine dichte Anlage erreicht wird.

Gemäß einer weitergehenden Ausführungsform der Erfindung ist vorgesehen, dass der übergreifende Hülsenabschnitt einen radial nach innen gerichteten umlaufenden Vorsprung aufweist, der in eine ihm zugewandte umlaufende Nut des übergriffenen Hülsenabschnitts eingreift und der an dem dem Flanschabschnitt abgekehrten freien Ende des Hülsenabschnitts angeordnet ist. Der Vorsprung befindet sich somit am freien elastischeren Endbereich des Hülsenabschnitts und kann daher leichter zusammengedrückt werden, um in die Nut des Hülsenabschnitts des anderen Teilrings einrasten zu können.

Es kann auch vorgesehen werden, dass die in der montierten Lage übereinanderliegenden und zugewandten Umfangsflächen der Hülsenabschnitte einen korrespondierenden konischen Verlauf aufweisen derart, dass der Innendurchmesser des übergreifenden Hülsenabschnitts von dem Vorsprung in Richtung auf den Flanschabschnitt abnimmt und dass der Außendurchmesser des übergriffenen Hülsenabschnitts von der umlaufenden Nut in Richtung auf das freie Ende entsprechend abnimmt. Durch diesen Verlauf der zugwandten Umfangsflächen wird die Dichtwirkung der übereinanderliegenden Hülsenabschnitt noch erhöht. Auch sind die Teilringe dadurch leichter herstellbar.

Gemäß einer weitergehenden Ausführungsform der Erfindung ist vorgesehen, dass der übergriffene Hülsenabschnitt an seinem dem Flanschabschnitt zugekehrten Ende einen radial nach außen weisenden umlaufenden Absatz aufweist, an den das freie Ende des übergreifenden Hülsenabschnitts in der montierten Lage anschlägt. Dadurch wir zum einen ein Anschlag für die Montage gebildet, da die Durchstecköffnung in der Regel nicht einsehbar ist. Der Vorsprung greift dann sicher in die ihm zugeordnete Nut ein und kann nicht über sie hinwegrutschen.

Besonders günstig ist es, wenn in der montierten Lage die inneren Maße des übergriffenen Hülsenabschnitts den inneren Maßen des innen freibleibenden Bereichs des übergreifenden Hülsenabschnitts entsprechen derart, dass eine im wesentlichen glatte innere Umfangsfläche des so gebildeten Durchgangs gebildet wird. Dadurch werden Einbuchtungen oder Hinterschneidungen im Bereich der Durchstecköffnung vermieden, so dass die Trübe gut fließen kann. Auch können sich Partikel nicht so leicht festsetzen.

Der Stützring besteht vorzugsweise aus einem nachgiebigen Kunststoff ausreichender Härte, damit die Montage einerseits und der fester Halt andererseits möglich sind. Es hat sich gezeigt, dass es günstig ist, wenn die Teilringe aus einem elastischen Kunststoff mit einer Shorehärte zwischen 70°A und 90°A bestehen. Ein solcher Kunststoff kann ein EPDM (Ethylen-Propylen-Dien-Kautschuk, M-Klasse) sein, der in der gewünschten Härte erhältlich ist.

Für die Montage eines der Filtertücher an einer Filterplatte werden diese zunächst passgenau auf beiden Seiten der Filterplatte mit einer umlaufenden Dichtung gehalten. Im Bereich der Durchstecköffnung oder des Trübedurchlaufs haben die Filtertücher ein Loch. Durch diese wird jeweils ein Teilring mit dessen Hülsenabschnitt gesteckt. Zunächst wird der übergreifende Hülsenabschnitt in die Durchstecköffnung eingeführt und anschießend der übergriffene Hülsenabschnitt des anderen Teilrings. Dann werden die Teilringe fest zusammengedrückt, bis die Hülsenabschnitte einrasten. Dies kann je nach Dicke der Filterplatte auch mit einer Hand erfolgen, die durch die Durchstecköffnung greift und somit die beiden gegenüberliegenden Flanschabschnitte umfasst. Es können somit ausreichend hohe Kraft bis zum Einrasten der Hülsenabschnitte aufgebracht werdem.

Die Teilringe sind nach dem Einrasten der Hülsenabschnitte fest miteinander verbunden. Gleichzeitig liegen die Flanschabschnitte aufgrund des geneigten Verlaufs der Anlageflächen fest und dicht auf dem Filtertuch. Es ist daher nicht erforderlich, dass sich die Stützringe in der montierten Gebrauchslage der Filterplatten der Filterpresse gegeneinander abstützen, um einen festen und dichten Halt zu erreichen. Gleichwohl können die Flanschabschnitte auf ihren dem Filtertuch abgekehrten Flachseiten mit Abstandhaltern versehen sein, die in der Gebrauchslage der Filterplatten aneinanderliegen.

Die Erfindung wird im Folgenden anhand der schematischen Zeichnung näher erläutert. Es zeigen:
- Fig. 1: die Seitenansicht auf einen Stützring gemäß der Erfindung in der zusammengesetzten Lage, teilweise im Schnitt, und
- Fig. 2: den Stützring in der auseinandergezogenen Lage, teilweise im Schnitt.

Der in der Zeichnung dargestellte Stützring 11 setzt sich aus zwei Teilringen 12, 13 zusammen, die in der Draufsicht kreisrund ausgebildet sind. Die Teilringe 12, 13 weisen jeweils einen Flanschabschnitt 14, 15 und einen Hülsenabschnitt 16, 17 auf. Die Teilringe 12, 13 werden koaxial mit ihren Hülsenabschnitten 16, 17 in einer Durchstecköffnung einer nicht gezeigten Filterplatte ineinandergeschoben, so dass sich eine garnrollenförmige Gestalt des Stützrings 11 ergibt. In der zusammengeschobenen Lage wird ein nicht gezeigtes Filtertuch zwischen den Anlageflächen 18, 19 der Flanschabschnitte 14, 15 und der ihnen zugwandten Seite der Filterplatte eingeklemmt. Insoweit ist ein solcher Stützring bekannt und bedarf hinsichtlich seiner Funktion keiner weiteren Erläuterung.

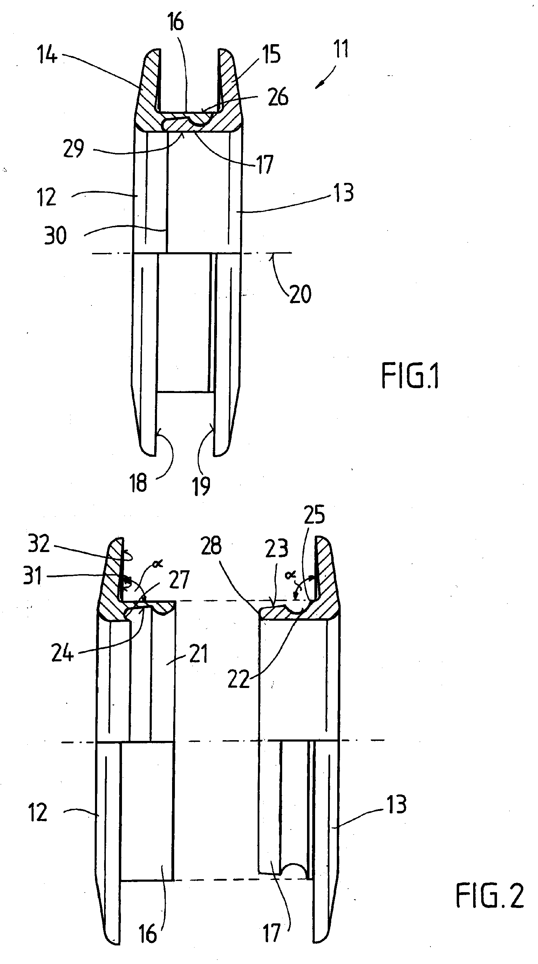

Die Hülsenabschnitt 16, 17 sind auf ihren zugewandten Umfangsflächen mit zusammenwirkenden Vorsprüngen und Nuten versehen, die in der montierten und in Figur 1 gezeigten Lage ineinandergreifen. Im Einzelnen ist die Anordnung so getroffen, dass der Hülsenabschnitt 16 des übergreifenden Teilrings 12 einen radial nach innen auf die Längsachse 20 des Stützrings weisenden umlaufenden Vorsprung 21 aufweist, der in eine korrespondierende umlaufende Nut 22 auf der äußeren Umfangsfläche des übergriffenen Hülsenabschnitts 17 des anderen Teilrings 13 eingreift. Der Vorsprung 21 ist vorzugsweise an dem freien Ende des Hülsenabschnitts 16 angeordnet. Dadurch werden die Hülsenabschnitte 16, 17 und somit die Teilringe 12, 13 fest miteinander verbunden. Grundsätzlich kann die dann radial nach innen geöffnete umlaufende Nut auch an dem übergreifenden Hülsenabschnitt und der dann radial nach außen gerichtete umlaufende Vorsprung an dem übergriffenen Hülsenabschnitt angeordnet sein.

Der dem übergreifenden Hülsenabschnitt 16 zugwandte Bereich 23 der Umfangsfläche des übergriffenen Hülsenabschnitts 17 weist zwischen seinem freien Ende 28 und der Nut 22 einen konischen Verlauf seiner Außenwandung auf, deren Außendurchmesser sich in Richtung auf den zugeordneten Flanschabschnitt 15 vergrößert. Dementsprechend hat der diesem Hülsenabschnittsbereich 23 zugewandte Bereich 24 des übergreifenden Hülsenabschnitts 16 zwischen dem Vorsprung 21 und dem zugeordneten Flanschabschnitt 14 einen konischen Verlauf seiner Innenwandung, deren Innendurchmesser sich in Richtung auf den zugeordneten Flanschabschnitt 14 verkleinert. In der zusammengesetzten Lage liegen diese Bereiche 23, 24 der Hülsenabschnitte dichten übereinander.

Bei dem gezeigten Ausführungsbeispiel ist der übergriffene Hülsenabschnittsbereich 23 über einen Absatz 25 von der äußeren Umfangsfläche des sich an den Flanschabschnitt 15 anschließenden Bereichs des Hülsenabschnitts 17 abgesetzt. Der Absatz 25 bildet einen Anschlag für das freie Ende des übergreifenden Hülsenabschnitts 16. Weiterhin wird dadurch eine im wesentlichen glatte äußere Umfangsfläche 26 des von den Flanschabschnitten 14, 15 des Stützrings 11 begrenzten mittleren Bereichs gebildet, welche Umfangsfläche im wesentlichen aus der äußeren Umfangsfläche des übergreifenden Hülsenabschnitts 16 gebildet wird.

Weiterhin schließt sich an den übergreifenden Bereich 24 des Hülsenabschnitts 16 ein radial nach innen weisender Absatz 27 an, der einen Anschlag für den übergriffenen Hülsenabschnitt 17 bildet. Es kann vorgesehen werden, dass die dem Hülsenabschnitt 17 zugewandte Stirnfläche des Absatzes 27 rinnenförmig ausgebildet ist, so dass das freie Ende 28 des übergriffenen Hülsenabschnitts 17 in der montierten Lage in die Rinne eintaucht. Dadurch wird ein besonders fester und dichter Halt des übergriffenen Hülsenabschnitts 17 in dem übergreifenden Hülsenabschnitt 16 erreicht.

Insgesamt sind die Abmaße der Hülsenabschnitte 16, 17, deren Absätze 25, 27 sowie deren übereinanderliegenden Bereiche 23, 24 so gewählt, dass in der zusammengesetzten Lage eine im wesentlichen glatte innere Umfangsfläche 29 des Stützrings 11 gebildet wird. Es ist lediglich eine umlaufende Trennfuge 30 zwischen dem freien Ende 28 des übergriffenen Hülsenabschnitts 17 und dem Absatz 27 des übergreifenden Hülsenabschnitts 16 vorhanden.

In der zusammengesetzten Lage entspricht der Abstand der Anlageflächen 18, 19 in dem sich an den Hülsenabschnitt anschließenden Bereich der Dicke der Filterplatte im Bereich der Durchstecköffnung zuzüglich der Stärke der zu haltenden Filtertücher. Dadurch ist gewährleistet, dass die Teilringe 12, 13 gut zu dem Stützring 11 zusammengeschoben werden können und dass der Vorsprung 21 sicher in die Nut 22 eingreift.

Die Anlageflächen 18, 19 der Flanschabschnitte 14, 15 weisen in Richtung auf ihren Umfangsrand einen nach innen in Richtung auf die Filterplatte geneigten Verlauf auf. Der Anstellwinkel α zwischen der Längsachse 20 des Stützrings 11 und der Anlagefläche 18, 19 beträgt zwischen 80° und 89,5°. Dadurch werden die Flanschabschnitte 14, 15 bei der Montage nach außen gebogen und liegen somit unter Vorspannung an den jeweiligen Filtertüchern an. Dadurch wird eine besonders dichte Anlage geschaffen.

Bei dem gezeigten Ausführungsbeispiel ist die ringförmige Anlagefläche unterteilt in einen inneren Ringabschnitt 31 und einen äußeren Ringabschnitt 32, die jeweils einen unterschiedlichen Anstellwinkel α zur Längsachse 20 des Stützrings 11 aufweisen. Dadurch wird zum einen die Montage erleichtert. Zum anderen wird der weiter außen liegende Ringabschnitt 32 mit einem kleineren Winkel besser an das Filtertuch gepresst, so dass die Dichtwirkung erhöht wird. Es ist natürlich auch möglich, dass sich der Winkel zwischen Längsachse und Anlagefläche kontinuierlich oder mehrfach ändert.

Durch einen solchen zweitliegen Stützring wird die Montage eines Filtertuchs in der Filterpresse wesentlich erleichtert, da kein Durchstecken des Filtertuchs mehr erforderlich ist. Der Stützring kann mit seinen Flanschabschnitten 14, 15 auch fest mit dem Filtertuch vernäht sein. Grundsätzlich reicht die elastische Anlage der Flanschabschnitte 14, 15 auf dem Filtertuch aus, um einen dichten Abschluss zu bilden. In diesem Fall wäre der Stützring ein von dem Filtertuch separates und somit wiederverwendbares Bauteil.

## Patentansprüche

1. Stützring zum Halten von Filtertüchern an einer Filterplatte, welcher Stützring (11) zwei koaxiale Teilringe (12, 13) umfasst, die jeweils einen sich in der montierten Lage gegenüberliegenden Flanschabschnitt (14, 15) aufweisen, welche Flanschabschnitte (14, 15) in der montierten Lage jeweils ein Filtertuch im Bereich der Durchstecköffnung der Filterplatte überdecken und die jeweils einen Hülsenabschnitt (16, 17) aufweisen, die in die Durchstecköffnung hineinragen, welche Hülsenabschnitte (16, 17) über wenigstens einen umlaufenden Vorsprung (21), der in wenigstens eine korrespondierende umlaufende Nut (22) eingreift, miteinander verbundbar sind derart, dass die Teilringe (12, 13) jeweils von einer Seite der Filterplatte montierbar sind, **dadurch gekennzeichnet, dass** die dem Filtertuch zugekehrten Anlageflächen (18, 19) der Flanschabschnitte (14, 15) einen in Richtung auf die Filterplatte geneigten Verlauf aufweisen derart, dass die Flanschabschnitte (14, 15) in der montierten Lage unter Vorspannung an dem Filtertuch anliegen.

2. Stützring nach Anspruch 1, **dadurch gekennzeichnet, dass** der Anstellwinkel (α) der Anlagefläche (18, 19) des Flanschabschnitts (14, 15) zur Längsachse (20) des Stützrings (11) in der Loslage zwischen 80° und 89,5° beträgt.

3. Stützring nach Anspruch 1 oder 2, **dadurch gekennzeichnet, dass** der Anstellwinkel (α) der Anlagefläche (18, 19) des Flanschabschnitts (14, 15) zur Längsachse (20) des Stützrings (11) in Richtung auf den äußeren Rand des Flanschabschnitts (14, 15) stetig oder abschnittsweise zunimmt.

4. Stützring nach Anspruch 3, **dadurch gekennzeichnet, dass** die Anlagefläche (18, 19) einen inneren Ringabschnitt (31) und wenigsten einen äußeren Ringabschnitt (32) aufweist, und dass der innere Ringabschnitt (31) in einem Anstellwinkel (α) von 80° bis 87° zur Längsachse und der äußere Ringabschnitt (32) in einem Anstellwinkel (α) von 87° bis 89,5° zur Längsachse verläuft.

5. Stützring nach einem der Ansprüche 1 bis 4, **dadurch gekennzeichnet, dass** der Hülsenabschnitt (16) des einen Teilrings (12) den Hülsenabschnitt (17) des andere Teilrings (13) in der montierten Lage übergreift und dass die Länge der sich übergreifenden Bereiche der Hülsenabschnitte (16, 17) zwischen 45% und 98% des Abstands der Anlageflächen (18, 19) der Flanschabschnitte (14, 15) in der montierten Lage beträgt.

6. Stützring nach Anspruch 5, **dadurch gekennzeichnet, dass** der übergreifende Hülsenabschnitt (16) einen radial nach innen gerichteten umlaufenden Vorsprung (21) aufweist, der in eine ihm zugewandte umlaufende Nut (22) des übergriffenen Hülsenabschnitts (17) eingreift und der an dem dem Flanschabschnitt (14) abgekehrten freien Ende des Hülsenabschnitts (16) angeordnet ist.

7. Stützring nach Anspruch 5 oder 6, **dadurch gekennzeichnet, dass** die in der montierten Lage übereinanderliegenden und zugewandten Umfangsflächen (23, 24) der Hülsenabschnitte (17, 16) einen korrespondierenden konischen Verlauf aufweisen derart, dass der Innendurchmesser des übergreifenden Hülsenabschnittbereichs (24) von dem Vorsprung (21) in Richtung auf den Flanschabschnitt (14) abnimmt und dass der Außendurchmesser des übergriffenen Hülsenabschnittbereichs (23) von der umlaufenden Nut (22) in Richtung auf das freie Ende (28) entsprechend abnimmt.

8. Stützring nach einem der Ansprüche 1 bis 7, **dadurch gekennzeichnet, dass** der übergriffene Hülsenabschnitt (17) an seinem dem Flanschabschnitt (15) zugekehrten Ende einen radial nach außen weisenden umlaufenden Absatz (25) aufweist, an den das freie Ende des übergreifenden Hülsenabschnitts (16) in der montierten Lage anschlägt.

9. Stützring nach einem der Ansprüche 1 bis 8, **dadurch gekennzeichnet, dass** in der montierten Lage die inneren Maße des übergriffenen Hülsenabschnitts (17) den inneren Maßen des innen freiliegenden Bereichs des übergreifenden Hülsenabschnitts (16) entsprechen derart, dass eine im wesentlichen glatte innere Umfangsfläche (29) des so gebildeten Durchgangs gebildet wird.

10. Stützring nach einem der Ansprüche 1 bis 9, **dadurch gekennzeichnet, dass** die Teilringe (12, 13) aus einem elastischen Kunststoff mit einer Shorehärte zwischen 70°A und 90°A bestehen.
